Europäisches Patentamt

European Patent Office

Office européen des brevets

(11) Publication number: **0 222 440**
**B1**

# EUROPEAN PATENT SPECIFICATION

(45) Date of publication of patent specification: **18.10.89**

(21) Application number: **86201860.3**

(22) Date of filing: **24.10.86**

(51) Int. Cl.⁴: **A 01 B 49/02, A 01 B 51/04**

(54) A soil cultivating implement.

(30) Priority: **29.10.85 NL 8502944**
**21.11.85 NL 8503204**
**26.02.86 NL 8600476**

(43) Date of publication of application:
**20.05.87 Bulletin 87/21**

(45) Publication of the grant of the patent:
**18.10.89 Bulletin 89/42**

(84) Designated Contracting States:
**DE FR GB NL**

(56) References cited:
**EP-A-0 136 734**
**AU-B- 524 172**
**DE-A-2 557 753**

(73) Proprietor: **C. van der Lely N.V.**
**Weverskade 10 P.O. Box 26**
**NL-3155 ZG Maasland (NL)**

(72) Inventor: **van der Lely, Ary**
**10A, Weverskade**
**Maasland (NL)**
Inventor: **Bom, Cornelis Johannes Gerardus**
**16, Laan van Nieuw Rozenburg**
**Rozenburg (NL)**

(74) Representative: **Mulder, Herman et al**
**Octrooibureau Van der Lely N.V. Weverskade 10**
**P.O. Box 26**
**NL-3155 ZG Maasland (NL)**

Courier Press, Leamington Spa, England.

## Description

The invention relates to a soil cultivating machine comprising a frame in which a plurality of soil cultivating members are supported and a roller located behind the soil cultivating members and supported by a carrier construction, which carrier construction is movable in height relative to the frame, and an adjusting member is disposed between the carrier construction and the upper side of a trestle mounted on the frame, the adjusting member bing operable from the tractor, and an indicator mechanism is present, with the aid of which the adjusted position of the roller can be checked from the tractor and which constitutes part of the adjusting member, the adjusting member has two portions which are movable relative to each other and are adjustable to a plurality of positions relative to each other, and the indicated mechanism includes an indicator member connected to one of said portions.

With this known construction, the indicator member is provided with a pointer that is fixed to the upper part of the adjusting member and cooperates with a graduated scale on the lower part of said member. Although this provision has the advantage that an indicator mechanism is obtained which can be easily attached and be used with several other machines, its position on the adjusting member is such that an easy observation from the tractor is not always possible.

The invention now has for its object to overcome this disadvantage while maintaining the above-mentioned advantage.

In accordance with the invention this is accomplished in that the indicator member is a pointer capable of rotation around a shaft and moving along a graduated scale and in that the graduated scale and the pointer are provided on the upper portion of the adjusting member, said pointer being pivotally connected to the lower portion of the adjusting member via a rod. By means of this construction, an easy observation of the indicator mechanism is guaranteed under all circumstances, because of the fact that the indicator mechanism as a whole is disposed as near to the tractor as possible.

A construction wherein during operation the working parts of a soil cultivating machine are movable with respect to a trestle is known from the Australian patent 524 172. With this known construction, however, the frame carrying the soil working members also carries a roller disposed to the rear of the soil working members, which increases the weight in such a way that an effective movement of the soil working members in height, when for instance encountering solid objects like stones, is unfavourably influenced.

Another construction is known from EP—A—136 734.

For a better understanding of the invention and to show how the same may be carried into effect, reference will now be made, by way of example, to the accompanying drawings, in which:

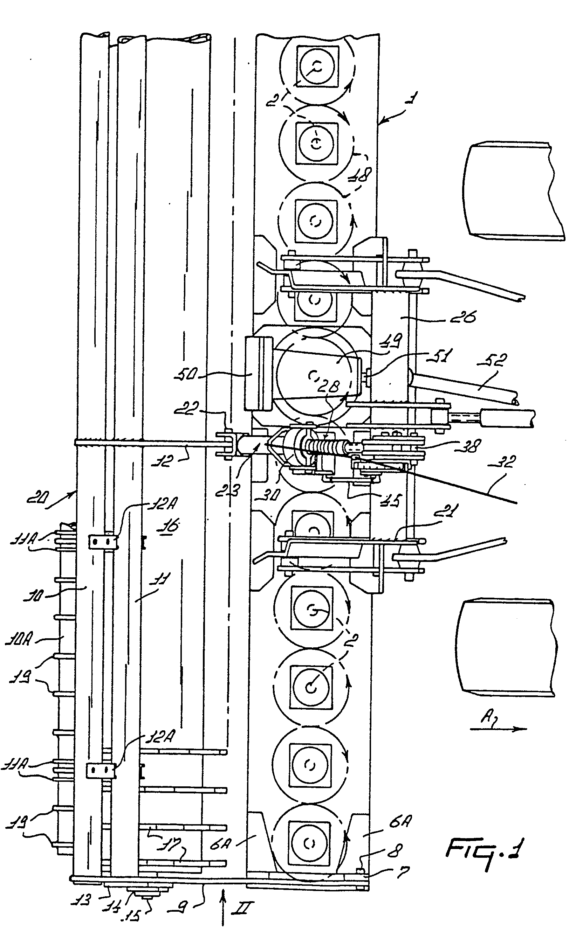

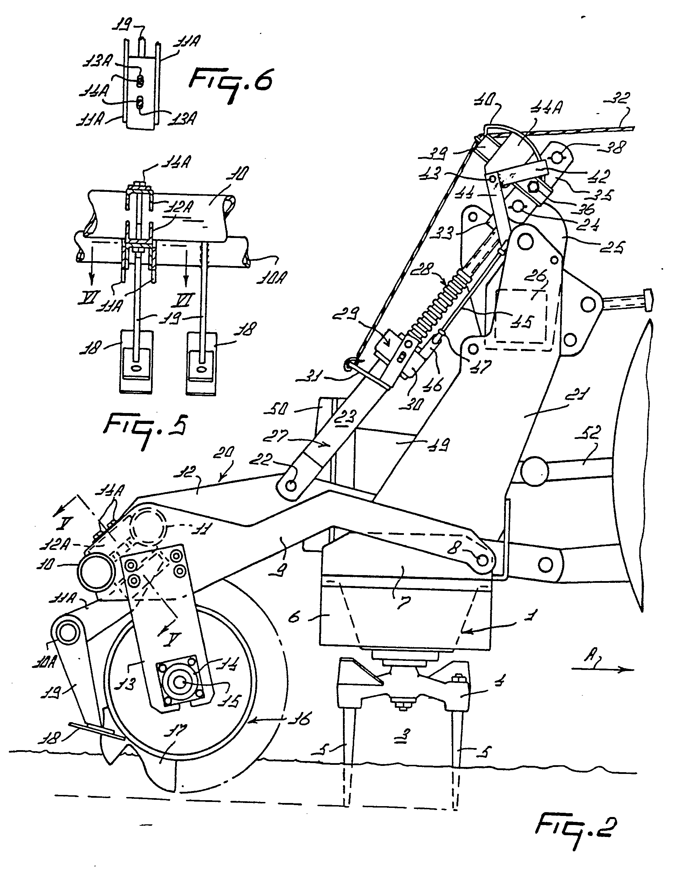

Figure 1 is a plan view of a soil cultivating machine, in which an adjusting member is used in combination with an indicator mechanism according to the invention;

Figure 2 is, to an enlarged scale, a view taken in the direction of the arrow II in Figure 1;

Figure 3 is, to an enlarged scale, a view of the upper side of the adjusting member where the indicator mechanism is located and the coupling of the adjusting member to a coupling trestle associated with the frame of the machine for coupling to the three-point lifting device of a tractor;

Figure 4 is a view taken in the direction of the arrow IV in Figure 3;

Figure 5 is, to an enlarged scale, a view taken on the line V—V in Figure 2;

Figure 6 is a view taken on the line VI—VI in Figure 5;

Figure 7 is a partial rear view of a second embodiment of a packer roller associated with the soil cultivating machine according to the invention, and

Figure 8 is a view taken on the line VIII—VIII in Figure 7.

The arrangement shown in the drawings relates to a soil cultivating machine, more specifically for the preparation of seed bed.

The machine comprises a box-like frame portion 1 which extends transversely to the direction of operatative travel A and in which the upwardly directed, preferably at least substantially vertical, shafts 2 of soild cultivating members 3 are supported equidistantly at preferably 25 cms. Each of the soil cultivating members 3 includes an at least substantially horizontal carrier 4 which is disposed under the box-like portion 1 on a shaft 2 and has at each end a downwardly extending soil cultivating portion 5 constituted by a tine.

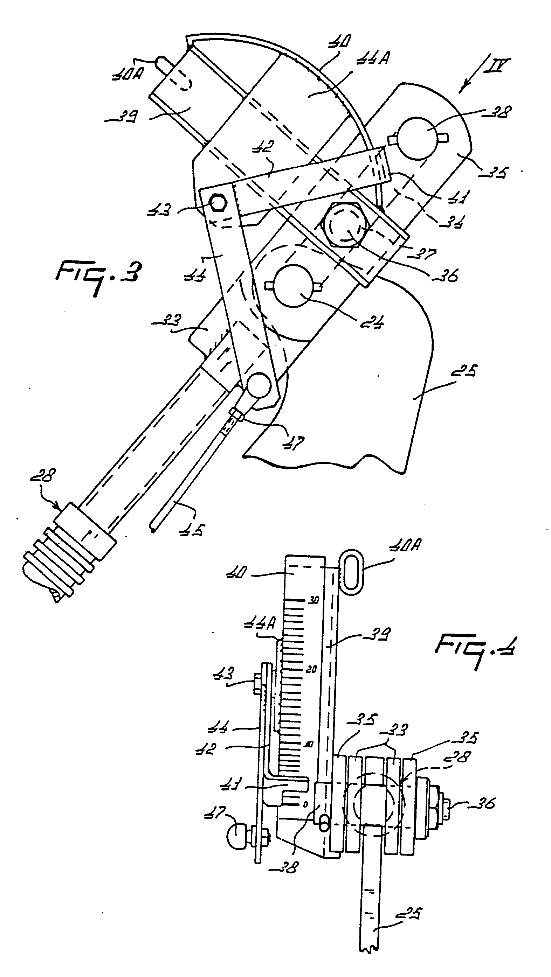

The ends of the box-like frame portion 1 are each closed by rectrangular plates 6. The upper sides of the rectangular plates 6 are covered by downwardly bent portions of a cover plate (6A) disposed at the upper side of the frame portion 1 (Figure 2). An upwardly extending support 7 is arranged above each of the plates 6. Each support 7 includes an at least substantially horizontally extending transverse shaft 8. An arm 9, which extends rearwardly along a support 7, is provided freely pivotably around the transverse shaft 8, said arm having a widened portion at its rear side. The widened portions of the two arms 9 are interconnected by means of two tubular transverse beams 10 and 11.

As is shown in Figure 2, the foremost transverse beam 11 is in a higher position than the rearmost one. Near the centre, the transverse beams 10 and 11 are connected to an upwardly directed plate 12, which extends at least substantially parallel to a vertical plane in the direction of operative travel A. In a manner not further shown, the plate 12 is arranged pivotally near the front side of the box-like frame portion 1 by means of an upright lug and a transverse shaft located in line with the transverse shafts 8 for the arms 9.

In the region of the foremost transverse beam 11 the widened portions of the arms 9 are each provided with a downwardly and slightly forwardly extending support 13 in the form of a plate. At the bottom side, a roller 16 is arranged freely rotatably between the supports 13 by means of bearings accomodated in a bearing housing 14 and a shaft 15.

In this embodiment, the roller 16 is in the form of a packer roller, while scrapers 18 are present that reach to between the crowns of cams 17. The scrapers 18 each are connected to a carrier 10A by means of an arm 19 which is directed obliquely upwardly and rearwardly. As seen in side view, the carrier 10A is located behind the transverse beam 10, so that there is sufficient space for the extra large packer roller preferably having a diameter of approximately 50 cms. The carrier 10A is mounted between the transverse beams 10 and 11 by means of supports 11A and clamping means 12A. The supports 11A can be adjusted by means of a slot 13A and bolts 14A, so that the appropriate position relative to the cylindrical portion of the packet roller can be set. The specific arrangement of the carrier 10A ensures that, in spite of the use of a packer roller having a large diameter, the whole assembly remains compact, so that the combination with a seed drill or a planter arrangement is not impeded or negatively affected. As is shown in Figure 2, the supports 11A are situated between the roller 16 and the transverse beams 10 and 11, their exact location being between the crown of cams 17. If a packer roller having a smaller diameter is used, the carrier 10A can be detached and scrapers can be fitted to the rearmost frame beam 10 with the aid of appropriate means. Together with the plate 12 and the transverse beams 10 and 11, the arms 9 constitute a carrier construction 20 for the roller 16.

Near its centre, the box-like frame portion 1 is provided with a trestle 21 which constitutes a three-point hitch for coupling the machine to the three-point lifting device of a tractor.

The plate 12 positioned near the centre is provided near its upper side with a transverse shaft 22 which, seen in plan view, is positioned just before the roller 16 and which constitutes an attachement point for a bifurcate portion of an adjusting member 23 that is pivotal thereabout. The adjusting member 23 is fitted pivotally by means of an attachment point constituted by a detachable pin 24 to a lug 25 located near the upper side of the trestle 21 and fitted to a transverse beam 26 of this trestle. The lug 25 is located near the uppermost coupling point of the three-point hitch on the trestle 21.

The adjusting member 23 comprises two portions 27 and 28 which can be moved telescopically relative to each other. The upper portion 28 is capable of sliding in the lower portion 27 and has teeth forming part of a locking mechanism 29 which, arranged on the lower portion, has a locking portion 30. Said locking portion 30 can be made inoperative by means of a handle 31 operable from the tractor via a flexible pull member 32, the arrangement being such that, when the lifting device of the tractor is moved downwardly, the upper portion 28 of the adjusting member 23 is pushed into the lower portion 27. After the pull member 32 has been released, the two portions 27 and 28 are automatically fixed relative to each other by means of the locking portion 30.

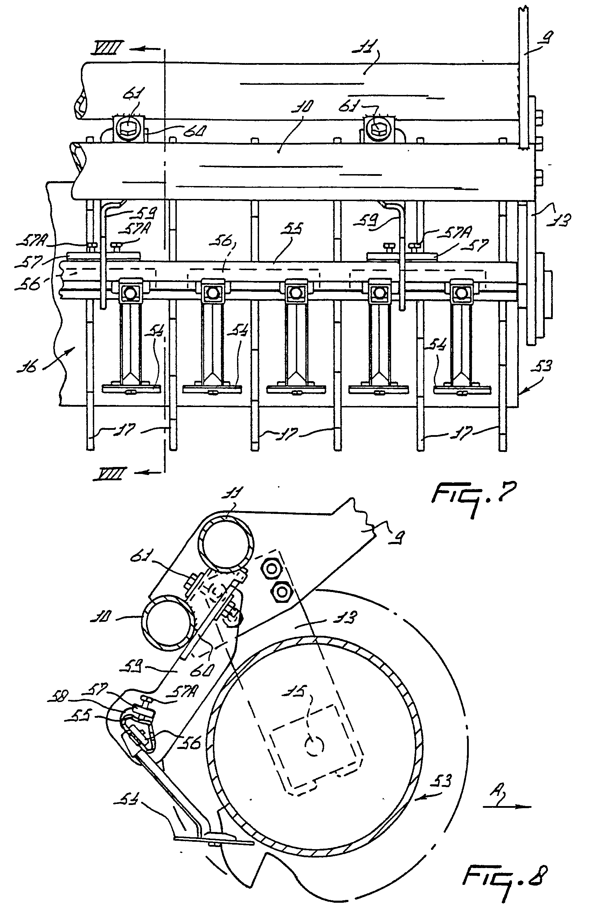

The upper portion 28 of the adjusting member 23 has two spaced-apart portions 33 in the form of plates, which are located on both sides of the lug 25. The plate-shaped portions 33 have a slot 34, through which the pin 24 is inserted (Figures 3 and 4).

Strips 35 having a width corresponding to that of the portions 33 are positioned on both sides of the portions 33 (Figure 4). The strips 35 are retained in position by means of the pin 24 and a bolt 36 located near the centre. The bolt 36, which is inserted through the slot 34, is surrounded by a spacer bush 37 disposed between the strips. At their upper sides the strips 35 have an aperture, through which a detachable pin 38 is inserted, the arrangement being such that a movement of the portions 33 with respect to the strips 35 and the lug 25 is not possible anymore. At the same time, the bolt 36 ensures the connection of a support 39, which extends at least substantially perpendicularly to the strips 35 and is directed obliquely rearwardly and upwardly. The support 39 is constituted by a U-profile and bears via a folded portion against the front side of the, seen in the direction of operative travel A, right-hand strip 35. At its upper side the support 39 is provided with a lug 40A, through which the flexible pull member 32 is passed.

The front side of the support 39 is provided with a curved strip 40 which, at its front side, has a graduated scale (Figure 4) ranging from 0 to 30. A pointer 41 constituted by the right-angled portion of an arm 42 can move along the graduated scale on the strip 40. The arm 42 is fitted pivotally by means of a bolt 43 to a plate 44A which is located near the centre of the support 39 and at the same time supports the centre of the curved strip 40 having the graduated scale. An arm 44, which is at right angles to the arm 42, is capable of pivoting together with this arm around the bolt 43. The lower end of the arm 44 is in hinging connection with one end of a rod 45, which extends at least substantially parallel to the upper portion 28 of the adjusting member 23 and is in hinging connection with a lug 46 on the locking portion 30 of the locking mechanism 29. At each end, the rod 45 is provided with screw thread and setting nuts 47, with the aid of which the rod length, and hence the correct setting of the pointer 41, can be effected. The bolt 43 constitutes a pivot shaft for the pointer 41, which pivot shaft is located to the rear of the adjusting member.

Inside the box-like frame portion 1, a straight-toothed pinion 48 is provided on each of the shafts 2, the arrangement being such that the pinions 48 on the shafts 2 of adjacent soil cultivating members 3 are in driving connection with each other. Near the centre, the shaft 2 of a soil cultivating member 3 is extended upwardly and by means of this extension reaches into a gear box 49, inside which this shaft is in driving connection, via conical gear tranmission and a speed variator 50 located at the the rear of the gear box, with a shaft 51 which extends in the direction of operative travel A and, at the front side, projects from the gear box. The shaft 51 is connectable to the power take-off shaft of a tractor via an intermediate shaft 52.

Figures 7 and 8 show a packer roller 53 which forms part of the machine according to the invention and is provided with scrapers 54, a carrier 55 for the scrapers being formed by a profile in which clamping means 56 arranged at the upper side of the scrapers 54 are slidable and lockable. By means of clamping means 57 and bolts 57A, the carrier 55 is disposed within recessed portions 58 in supports 59 which are detachably connected by means of clamping means 60 and bolts 61 to the beams 10 and 11.

The use of a clamping connection reduces the risk of deformation of the carrier 55, whilst the specific disposal of the scrapers 54 enable an easy adjustment thereof.

The arrangement described in the foregoing operates as follows.

During operation, the machine is connected to the three-point lifting device of a tractor by means of the trestle 21 and each soil cultivating member 3 can be driven from the power take-off shaft via the intermediate shaft 52 and the transmission described in the foregoing, the arrangement being such that adjacent soil cultivating members rotate in opposite directions and cultivate by means of their soil cultivating portions 5 at least contiguous strips of soil. The working depth of the soil cultivating members 3 can be set by means of the roller 16, respectively 53, which is located behind the soil cultivating members and is supported by a carrier construction 20 and — as has been described above — in this embodiment is constructed as a packer roller.

During operation, the carrier construction 20 of the roller 16, respectively 53, is fixed in the selected position by means of the adjusting member 23 in that the two portions 27 and 28 of the adjusting member are locked relative to each other. If so desired, the upper pin 38 can be removed from the apertures in the strip 35, as a result of which the portions 33 of the upper portion 28 of the adjusting member 23 are capable of sliding in both directions by means of the slot 34 relative to the pin 24 which is supported by the lug 25 on the trestle 21, and thus the frame portion 1 together with the soil cultivating members 3 has a limited degree of movement during operation, so that, for example, damage on hitting hard objects, such as stones, can be avoided. In this situation, a pivoting movement of the frame portion 1 relative to the carrier construction 20 around the transverse shafts located near the front side of the box-like frame portion 1 is possible through a distance which corresponds to the length of the slot 34.

If a change of the working depth of the soil cultivating members 3 is desired, then the position of the carrier construction 20, and hence that of the roller 16, respectively 53, relative to the box-like frame portion 1 must be altered. This can be effected as follows. With the aid of the flexible operation or pull member 32 the locking realised by means of the locking mechanism 29 can be removed, whereafter the lifting device can be moved downwards, so that the carrier construction 20 of the roller 16, respectively 53, and hence the lower portion 27 of the adjusting member 23, are moved upwards. Then the pointer 41 travels along the graduated scale on the strip 40 in a direction indicated by an arrow in Figure 2. A reading of the graduated scale on the strip 40 will tell the tractor driver whether he has reached the correct position. In this connection, it may be assumed that each line of the graduated scale on the strip 40 corresponds to approximately one centimetre. In the chosen postion, a locking of the two portions 27 and 28 of the adjusting member 23 is automatically effected by the locking mechanism 29.

In the above-described construction, the pointer 41 and the graduated scale on the strip 40, which together constitute an indicator mechanism, are part of the adjusting member 23. The whole assembly can easily be removed by detaching the pins 24 and 38, for use with other machines. By removing the bolt 36, the indicator mechanism constituted by the pointer 41 and the graduated scale on the curved strip 40 can be removed as an integral unit.

The invention is not limited to the above-described features, but also relates to all the details shown in the drawings, whether they have been described or not.

**Claims**

1. A soil cultivating machine comprising a frame (1) in which a plurality of soil cultivating members (3) are supported, and a roller (16) located behind the soil cultivating members (3) and supported by a carrier construction, which carrier construction is movable in height relative to the frame (1), and an adjusting member (23) is disposed between the carrier construction and the upper side of a trestle (21) mounted on the frame, said adjusting member (23) is operable from the tractor, and an indicator mechanism (40, 41) is present, with the aid of which the adjusted position of the roller (16) can be checked from the tractor and which constitutes part of the adjusting member (23), the adjusting member (23) has two portions (27, 28) which are movable relative to each other and are adjustable to a plurality of positions relative to each other, and the indicator mechanism (40, 41) includes an indicator (41) member connected to one of said portions, characterized in that the indicator member (41) is a pointer capable of rotation around a shaft (43) and moving along a graduated scale (40), and that the graduated scale (40) and the pointer (41) are provided on the upper portion (28) of the adjusting member (23), said pointer being pivotally connected to the lower portion (27) of the adjusting member (23) via a rod (45).

2. A soil cultivating member as claimed in claim 1, characterized in that the shaft (43), around which the pointer (41) is pivotable, is located to the rear of the adjusting member (23), relative to the direction of operative travel of the machine.

3. A soil cultivating machine as claimed in claim 1 or 2, characterized in that the length of the rod (45) is variable.

4. A soil cultivating machine as claimed in any preceding claim, characterized in that the upper portion (28) of the adjusting member (23) is movable in height through a predetermined distance relative to the trestle (21), and a pin (24) on the trestle (21) is capable of movement in a slot (34) that extends in the longitudinal direction of the adjusting member (23), the slot (34) is provided in two spaced apart portions (33) in the form of plates (35) and forms part of the upper portion (28) of the adjusting member (23), the said spaced apart portions extend on both sides of a lug (25) on the trestle (21) and can co-operate with the pin (24) on this lug, said pin is passed through the slot (34) provided in both spaced apart portions (33), and that on both sides of the spaced apart portions (33) there are plates (35) which near their ends are provided with an aperture, through which another pin (38) can be inserted, the arrangement being such that, if said other pin (38) is present in said aperture in both plates, the adjusting member (23) is fixed relative to the trestle (21).

5. A soil cultivating meachine as claimed in any one of the preceding claims, characterized in that the roller (16) is in the form of a packer roller and scrapers (18) are disposed on a carrier (10A) located behind transverse beams (10 and 11) which form part of the carrier construction for the roller (16) and that, by means of a fastening means (12A, 14A) present beteen the transverse beams (10 and 11), the carrier is arranged capable of being adjusted relative to the carrier construction.

**Patentansprüche**

1. Bodenbearbeitungsmaschine mit einem Gestell (1), in dem eine Anzahl Bodenbearbeitungseinheiten (3) gelagert sind, und mit einer Walze (16), die hinter den Bodenbearbeitungseinheiten (3) angeordnet und von einer Tragkonstruktion abgestützt ist, die in bezug auf das Gestell (1) höhenbewegbar ist, und mit einer Stellvorrichtung (23), die zwischen der Tragkonstruktion und dem oberen Ende eines Bockes (21) angeordnet und vom Schlepper aus zu bedienen ist, und mit einer Anzeigevorrichtung (40, 41), an der die eingestellte Position der Walze (16) von Schlepper aus ablesbar ist und die Bestandteil der Stellvorrichtung (23) ist, welche zwei Teile (27, 28) aufweist, die relativ zueinander bewegbar und in mehrere Positionen einstellbar sind, wobei die Anzeigevorrichtung (40, 41) ein Anzeigeglied (41) aufweist, das mit einem der genannten Teile verbunden ist, dadurch gekennzeichnet, daß das Anzeigeglied (41) ein Zeiger ist, der um eine Achse (43) drehbar und entlang einer mit Skalenstrichen versehenen Skala (40) bewegbar ist, und daß die Skala (40) und der Zeiger (41) am oberen Teil (28) der Stellvorrichtung (23) vorgesehen sind und der Zeiger mit dem unteren Teil (27) der Stellvorrichtung (23) über eine Stange (45) schwenkbar verbunden ist.

2. Bodenbearbeitungsmaschine nach Anspruch 1, dadurch gekennzeichnet, daß die Achse (43), um die der Zeiger (41) schwenkbar ist, an der Rückseite der Stellvorrichtung (23) angeordnet ist, bezogen auf die Arbeitsrichtung der Maschine.

3. Bodenbearbeitungsmaschine nach Anspruch 1 oder 2, dadurch gekennzeichnet, daß die Länge der Stange (45) veränderbar ist.

4. Bodenbearbeitungsmaschine nach einem der Ansprüche 1 bis 3, dadurch gekennzeichnet, daß der obere Teil (28) der Stellvorrichtung (23) über eine vorgegebene Distanz relativ zu dem Bock (21) höhenbewegbar ist, und daß ein am Bock (21) vorhandener Stift (24) in einem Schlitz (34) bewegbar ist, der sich in Längsrichtung der Stellvorrichtung (23) erstreckt und in zwei mit Abstand voneinander angeordneten Teilen (33) in Form von Platten (35) vorgesehen ist, die Bestandteil des oberen Teils (28) der Stellvorrichtung (23) sind, wobei sich die mit Abstand voneinander angeordneten Teile beiderseits eines Ansatzes (25) des Bockes (21) erstrecken und mit dem an diesem Ansatz befindlichen Stift (24) zusammenwirken, der den Schlitz (34) durchsetzt, welcher in beiden mit Abstand voneinander angeordneten Teilen (33) vorgesehen ist, und daß beiderseits dieser Teile (33) Platten (35) vorhanden sind, welche nahe ihren Enden mit einer Öffnung versehen sind, in die ein weiterer Stift (38) einsetzbar ist, derart, daß die Stellvorrichtung (23) in bezug auf den Bock (21) arretiert ist, wenn sich der weitere Stift (38) in der Öffnung in beiden Platten befindet.

5. Bodenbearbeitungsmaschine nach einem der Ansprüche 1 bis 4, dadurch gekennzeichnet, daß die Walze (16) eine Packerwalze ist, daß Abstreifer (18) an einem Träger (10A) vorgesehen sind, der hinter Querbalken (10 und 11) angeordnet ist, welche Bestandteile der Tragkonstruktion für die Walze (16) sind, und daß der Träger mittels einer Befestigung (12A, 14A), die sich zwischen den Querbalken (10 und 11) befindet, relativ zu der Tragkonstruktion verstellbar ist.

**Revendications**

1. Machine pour cultiver le sol comprenant un chassis (1) dans lequel sont supportés une pluralité d'organes (3) pour cultiver le sol, et un rouleau (16) situé en arrière des organes (3) de culture du sol et supporté par une structure porteuse, laquelle structure porteuse est mobile en hauteur par rapport au chassis (1), et un organe de réglage (23) est disposé entre la structure porteuse et le côté supérieur d'une chèvre (21) montée sur le chassis, ledit organe de réglage (23) pouvant être actionné à partir du tracteur, un mécanisme indicateur (40, 41) étant présent, à l'aide duquel la position de réglage du rouleau (16) peut être vérifiée depuis le tracteur, ce mécanisme faisant partie de l'organe de réglage (23), l'organe de réglage (23) ayant deux parties (27, 28) mobiles l'une par rapport à l'autre et réglables l'une par rapport à l'autre en une pluralité de positions, le méchanism indicateur (40, 41) comportant un organe indicateur (41) relié à une desdites parties, caractérisée en ce que l'organe indicateur (41) est une aiguille pouvant tourner autour d'un arbre (43) et de se mouvoir le long d'une échelle graduée (40) et en ce que l'échelle graduée (40) et l'aiguille (41) sont prévues sur la partie supèrieure (28) de l'organe de réglage (23), ladite aiguille étant reliée de manière pivotante à la partie inférieure (27) de l'organe de réglage (23) par une tringle (45).

2. Machine pour cultiver le sol, telle que revendiquée dans la revendication 1, caractérisée en ce que l'arbre (43) autour duquel peut pivoter l'aiguille (41) est situé à l'arrière de l'organe de rélage (23), par rapport au sens de marche pour le travail de la machine.

3. Machine pour cultiver le sol, telle que revendiquée dans le revendication 1 ou 2, caractérisée en ce que la longueur de la tringle (45) est variable.

4. Machine pour cultiver le sol, telle que revendiquée dans l'une quelconque des revendications précédentes, caractérisée en ce que la partie supérieure (28) de l'organe de réglage (23) est mobile en hauteur sur une distance prédéterminée par rapport à la chèvre (21), et en ce qu'une broche (24) sur la chèvre (21) est capable de se mouvoir dans une fenêtre (35) qui s'étand dans le sens longitudinal de l'organe de réglage (23), la fenêtre (34) étant ménagée dans deux parties (33) espacées l'une de l'autre sous la forme de plaques (35) et faisant partie de la partie supérieure (28) de l'organe de réglage (23), lesdites parties espacées s'étendant de part et d'autre d'une patte (25) sur la chèvre (21) et pouvant coopérer avec la broche (24) sur cette patte, ladite broche traversant la fenêtre (34) ménagée dans l'une et l'autre des deux parties (33) espacées l'une de l'autre, et en ce que sur les deux côtés des parties (33) espacées l'une de l'autre, il y a des plaques (35) qui sont munies près de leurs extrémités d'une ouverture à travers laquelle peut être insérée une autre broche (38), l'agencement étant tel que, si ladite autre broche (38) est présente dans ladite ouverture dans les deux plaques, l'organe de réglage (23) est fixe par rapport à la chèvre (21).

5. Machine pour cultiver le sol, telle que revendiquée dans l'une quelconque des revendications précédentes, caractérisée en ce que le rouleau (16) est sous la forme d'un rouleau compacteur et en ce que des grattoirs (18) sont disposés sur un support (10A) situé derrière des poutres transversales (10 et 11) faisant partie de la structure porteuse du rouleau (16) et en ce que, grâce à un moyen d'attache (12A, 14A) présent entre les poutres transversales (10 et 11), le support (10A) est agencé de manière à pouvoir être réglé par rapport à la structure porteuse.

FIG.1

FIG.6

FIG.5

FIG.2

FIG.3

FIG.4

FIG.7

FIG.8